# EUROPÄISCHE PATENTANMELDUNG

(11) **EP 3 975 397 A1**
(43) Veröffentlichungstag der Anmeldung: **30.03.2022**
(21) Anmeldenummer: 21199249.0
(22) Anmeldetag: 27.09.2021
(51) Int. Cl.: H02K 15/00

(54) **VERFAHREN UND VORRICHTUNG ZUM PRÜFEN VON ELEKTRISCHEN ROTOREN**

(30) Priorität: 28.09.2020 DE 102020212216
(71) Anmelder: FRAUNHOFER-GESELLSCHAFT zur Förderung der angewandten Forschung e.V., 80686 München (DE)
(72) Erfinder: PILLE, Christoph, 28359 Bremen (DE); WÖSTMANN, Franz-Josef, 28359 Bremen (DE); GALARZA, Joandre, 22605 Hamburg (DE)
(74) Vertreter: Pfenning, Meinig & Partner mbB

(57) **Zusammenfassung**

Die Erfindung betrifft ein Verfahren zum Prüfen von elektrischen Rotoren, wobei eine Hochenergie-Röntgenquelle (20) und ein Detektor (30), insbesondere ein Zeilendetektor, bereitgestellt werden und ein Rotor (10), insbesondere ein gegossener Rotor (10), mittels der Hochenergie-Röntgenquelle (20) und des Detektors (30) durchleuchtet wird, zur Erfassung von ortsaufgelösten Informationen, insbesondere dreidimensional aufgelösten Computertomographie-Informationen des Rotors (10). Die Erfindung betrifft außerdem eine Vorrichtung zum Prüfen von elektrischen Rotoren, umfassend eine Hochenergie-Röntgenquelle (20) und einen Detektor (30) sowie ein Verarbeitungs- und Simulationsgerät (70), wobei die Hochenergie-Röntgenquelle (20) und der Detektor (30) eingerichtet sind, einen elektrischen Rotor (10) ortsaufgelöst, insbesondere dreidimensional zu erfassen und wobei das Verarbeitungs- und Simulationsgerät (70) eingerichtet ist, basierend auf derart erfassten ortsaufgelösten Daten ein Geometriemodell des elektrischen Rotors (10) zu erstellen und elektromagnetische Simulationen für das Geometriemodell durchzuführen mit dem Ziel, die elektromagnetischen Auswirkung vorhandener Gussfehler - v.a. Porosität oder Lunker - in den gegossenen Anteilen des Rotors ― v.a. der Nutstableiter ― zu berechnen sowie daraus folgende Leistungsverluste oder thermische Probleme zu ermitteln.

## Beschreibung

Die Erfindung betrifft ein Verfahren und eine Vorrichtung zum Prüfen von elektrischen Rotoren.

Gegossene Rotoren für elektrische Maschinen weisen i.d.R. Gussfehler auf. Diese treten in den äußeren Kurzschlussringen und auch in den axial innenliegenden Nutstableitern auf.

Bisher wird vorwiegend eine zerstörende Prüfung von Rotoren durchgeführt, um Gussfehler in den Nutstableiter aufzudecken. Primär wird durch spanabhebende Bearbeitung der Rotor radial abgearbeitet, bis die Nutstäbe und darin verborgene Gussfehler offengelegt sind. Diese mechanische Bearbeitung der Rotoren ist zeit- und kostenintensiv, anschließend können die Rotoren nicht mehr verwendet werden. Das Prüfergebnis gilt somit nur für den zerstörten Rotor. Es können zu einem gewissen Grad Rückschlüsse auf ungeprüfte Rotoren gezogen werden, wenn diese bspw. baugleich sind und/oder mit demselben Werkzeug gefertigt wurden und/oder derselben Fertigungscharge angehören. Für diese ungeprüften Rotoren gibt es aber nur eine unzureichende Sicherheit.

Eine weitere Maßnahme zur zerstörenden Prüfung der Nutstableiter ist das chemische Auflösen des Blechpaketes durch Ätzen, bis nur noch der Gussanteil des sog. Käfigläufers zurück bleibt. Da dieser ausschließlich aus einem Material (meist Aluminium) einer Dichte besteht, kann er mittels Computertomographie durchleuchtet werden, ohne dass es zu Bildstörungen wie Artefakten etc. kommt, die beim Durchleuchten einer Materialpaarung aus Stahl und Aluminium auftreten würden. Der Prozess ist jedoch sehr kostenintensiv und technisch aufwändig, zudem ist auch hier der Rotor anschließend zerstört und nicht mehr einsatzfähig.

Eine zerstörungsfreie Qualitätsprüfung von Rotoren war bislang limitiert auf zwei Methoden: den experimentellen Prüfstand und die Durchleuchtung der außenliegenden Kurzschlussringe. Die elektrische Leistungsprüfung auf speziellen Prüfständen liefert zwar Rückschlüsse über die effektive Leistungsfähigkeit, jedoch keinen direkten Rückschluss auf Gussqualität und Gussfehler. Die für die Hersteller wichtige bildgebende Prüfung mittels Computertomographie hingegen war bislang beschränkt auf eine Durchleuchtung der außen freiliegenden Kurzschlussringe aus Aluminiumguss, deren Materialdichte mit 2,7 g/cm³ vergleichsweise gering ist gegenüber dem dickwandigen Blechpaket aus Stahl (Dichte ^{~} 7,6 g/cm³). Diese Kurzschlussringe sind jedoch - elektrisch betrachtet - von nachrangigem Interesse.

Aufgabe der Erfindung ist es daher, eine verbesserte zerstörungsfreie Qualitätsprüfung von Rotoren zu ermöglichen.

Dies wird gelöst durch ein Verfahren zum Prüfen von elektrischen Rotoren nach Anspruch 1 sowie durch eine Vorrichtung zum Prüfen von elektrischen Rotoren nach Anspruch 9. Vorteilhafte Ausgestaltungen ergeben sich aus den Unteransprüchen sowie aus der nachfolgenden Beschreibung und den Figuren.

Bei dem Verfahren zum Prüfen von elektrischen Rotoren werden eine Hochenergie-Röntgenquelle und ein Detektor, z.B. ein Zeilendetektor, bereitgestellt. Ein Rotor, insbesondere ein gegossener Rotor, wird mittels der Hochenergie-Röntgenquelle und des Detektors durchleuchtet. Dabei werden ortsaufgelöste Informationen des Rotors umfasst. Insbesondere können dreidimensional aufgelöste Informationen des Rotors erfasst werden. Beispielsweise werden dreidimensional aufgelöste Computertomographie-Informationen des Rotors erfasst.

Die Vorrichtung zum Prüfen von elektrischen Rotoren umfasst eine Hochenergie-Röntgenquelle und einen Detektor, beispielsweise einen Zeilendetektor. Sie umfasst außerdem beispielsweise ein Verarbeitungs- und Simulationsgerät. Die Hochenergie-Röntgenquelle und der Detektor sind beispielsweise dazu eingerichtet, einen elektrischen Rotor ortsaufgelöst, insbesondere dreidimensional zu erfassen. Das Verarbeitungs- und Simulationsgerät ist zum Beispiel dazu eingerichtet, basierend auf derart erfassten ortsaufgelösten, insbesondere dreidimensionalen Daten ein Geometriemodell des elektrischen Rotors zu erstellen und elektromagnetische Simulationen für das Geometriemodell durchzuführen.

Der Rotor kann eine Materialpaarung aus Stahl und Aluminium enthalten, insbesondere kann er ein Stahlblechpaket und Nutstableiter aus Aluminiumguss enthalten.

Die Hochenergie-Röntgenquelle und der Detektor sind vorzugsweise derart ausgelegt, dass sie in der Lage sind, Stahl zu durchleuchten und grafisch aufzulösen.

In möglichen Ausführungen kommt ein Flächendetektor als Detektor zum Einsatz. Vorzugsweise kommt aber ein Zeilendetektor zum Einsatz, der technisch die Entstehung von Artefakten und Bildstörungen reduzieren kann, indem er gezielt in einem räumlich begrenzten Bereich detektiert und in daran angrenzende Bereiche gestreute Strahlung nicht mit aufnimmt.

Zerstörungsfreie Prüfung, insbesondere der Nutstableiter im Blechpaket, wird durch das Verfahren bzw. die Vorrichtung beispielsweise ermöglicht.

Die Hochenergie-Röntgenquelle kann bspw. eine Leistung von mindestens 400 kV oder bevorzugt von mindestens 450 kV haben und/oder sie kann eine Leistung von höchstens 700 kV oder höchstens 600 kV haben.

Basierend auf den ortsaufgelösten, insbesondere dreidimensional aufgelösten Computertomographie-Informationen kann beispielsweise ein dreidimensionales Geometriemodell, insbesondere ein CAD-Modell für den Rotor erstellt werden. In einem Beispiel werden mit Hilfe der Hochenergie-Röntgenquelle und des Zeilendetektors detektiere Gussfehler, insbesondere Porositäten und/oder Lunker in den Nutstableitern des Rotors, aufgelöst. Diese Gussfehler finden sich dann vorzugsweise in dem CAD-Modell wieder.

Mit Hilfe einer Simulationssoftware zur Simulation von elektromagnetischen Systemen kann in einem Beispiel auf Basis des Geometriemodells, insbesondere dreidimensionalen Geometriemodells ein elektromagnetisches Verhalten des Rotors simuliert werden. Beispielsweise können eine elektrische Leistungsfähigkeit und/oder thermische Eigenschaften, insbesondere thermische Verluste, und/oder ein elektromagnetischer Zug bestimmt werden.

Daten mehrerer Rotoren, die unter Verwendung desselben Gießwerkzeugs hergestellt wurden, können gespeichert und miteinander verglichen werden. Das ermöglicht Rückschlüsse auf das Gießwerkzeug, so dass gegebenenfalls das Werkzeug angepasst, überarbeitet oder getauscht werden kann.

Durch die Erfindung wird vorzugsweise eine elektromagnetische Simulation basierend auf der vollständigen, realen Gussfehler-Charakteristik zur Berechnung der elektrischen Leistungsverluste sowie thermischer Verluste eines Rotors ermöglicht. D.h. insbesondere durch die mögliche dreidimensionale Darstellung können Gussfehler innerhalb der Nutstableiter räumlich aufgelöst und detailliert dargestellt werden. Diese Information ermöglicht die spätere elektrische Simulation der Auswirkung dieser Gussfehler.

Die Kenntnis über Art, Anzahl, Volumenanteil und Verteilung der Gussfehler ermöglicht es beispielsweise, im Rahmen des Verfahrens ein CAD-Modell der Gussfehler-Charakteristik zu erstellen. Auf dessen Basis kann eine elektromagnetische Simulation die Berechnung und Vorhersage der aufgrund von Gussfehlern, Porosität und Lunker reduzierten tatsächlichen elektrischen Leistung sowie der thermischen Verlustleistung erfolgen.

Unter anderem ist die Erfindung einsetzbar zur
- Qualitätsprüfung von gegossenen Rotoren,
- Bewertung von Prototypen und Erstmustern,
- Leistungsermittlung / Prüfstandversuche,
- Auslegung von Gießwerkzeugen und Gießsystemen.

Der Rotor kann sich zum Durchleuchten zwischen Detektor und Hochenergie-Röntgenquelle befinden. Dabei kann insbesondere eine Relativdrehung zwischen Rotor und Detektor und/oder Hochenergie-Röntgenquelle stattfinden. Beispielsweise wird der Rotor gedreht, um vollständige 3D-Informationen eines Volumens des Rotors zu erhalten. Es können alternativ oder zusätzlich auch Detektor und/oder Hochenergie-Röntgenquelle gedreht werden.

In möglichen Ausführungen des Verfahrens bzw. der Vorrichtung kann es vorgesehen sein, dass eine Wand des Rotors durchleuchtet wird, indem Detektor und Hochenergie-Röntgenquelle auf entgegengesetzten Seiten der Wand angeordnet werden. D.h., eine der beiden Komponenten, Detektor oder Hochenergie-Röntgenquelle, kann in ein Inneres des Rotors eingeführt werden und die jeweils andere Komponente außen verbleiben. Die Wand wird dann mittels der Hochenergie-Röntgenquelle durchleuchtet und die Strahlung der Hochenergie-Röntgenquelle auf der der Quelle abgewandten Seite detektiert. Insbesondere kann die Detektion lokal begrenzt durch den Zeilendetektor erfolgen. Auch hier kann eine Relativdrehung zwischen dem Rotor und dem Detektor und/oder der Quelle ausgeführt werden. Der Rotor kann insbesondere gedreht werden, um ein vollständiges Bild des gesamten Rotors zu erhalten. Dabei kann Röntgenbildinformationen des Rotors, z.B. in einer ausgerollten Darstellung, über den Azimut, der mit dem Drehwinkel der Drehung des Rotors korreliert, aufgetragen werden. Ein so erhaltenes Röntgenbild kann den Rotor derart abbilden, dass seine Informationen auf eine Zylindermantelfläche projiziert sind. Basierend auf diesen in auf eine Zylindermantelfläche projizierten Daten kann das Vorhandensein von Gussfehlern erkannt werden. In möglichen Ausführungen kann das erhaltene auf eine Zylindermantelfläche projizierte Bild mit zusätzlichen Informationen, bspw. baulichen Informationen des Rotors oder Daten aus weiteren Messungen versehen werden. So können zusätzliche z.B. Angaben über Tiefe oder Position eine Gussfehlers erhalten werden. So können aus diesen Röntgenbildinformationen auch Informationen, die das Volumen des Rotors betreffen, zumindest teilweise rekonstruiert werden.

Die Vorrichtung kann eine Drehvorrichtung zum Drehen des Rotors umfassen. Ferner kann entweder die Hochenergie-Röntgenquelle derart ausgebildet sein, dass sie in die Achse des Rotors einführbar ist, zum Durchleuchten eines Rotorquerschnitts von innen nach außen und/oder der Detektor kann derart ausgebildet ist, dass er in die Achse des Rotors einführbar ist, zum Detektieren im Inneren und also Durchleuten von außen nach innen.

Es versteht sich, dass die Merkmale, die hierin nur im Zusammenhang mit der Vorrichtung beschrieben sind, auch für das Verfahren beansprucht werden können und umgekehrt.

Die Erfindung wird im Folgenden anhand von Figuren beispielhaft erläutert. Darin zeigen:
- FIGN. 1a-c: Vorrichtungen zum Prüfen von elektrischen Rotoren,
- FIG. 2: einen gegossenen Rotor inkl. gefügter Welle im Zentrum,
- FIG. 3: einen Gussanteil eines Käfigläufers,
- FIGN. 4a, b: Gegenüberstellungen konventioneller CT-Scans eines Rotors mit unzureichender Auflösung mit Hochenergie CT-Scan mit 600kV Leistung und Zeilendetektor,
- FIGN. 5a, b: die Gegenüberstellungen aus Figur 4 in vereinfachter Darstellung
- FIGN. 6a, b: eine Darstellung von Gussdefekten eines Rotors, insbesondere der Fadenlunker in den Nutstableitern
- FIG . 7: links eine radiale Darstellung eines CT-Schnittbildes des Rotors und rechts eine axiale Darstellung eines ausgewählten Nutstableiters,
- FIG. 8: eine dreidimensionale Darstellung von Gussfehlern, und
- FIG. 9: ein Foto eines Käfigläufers eines Rotors.

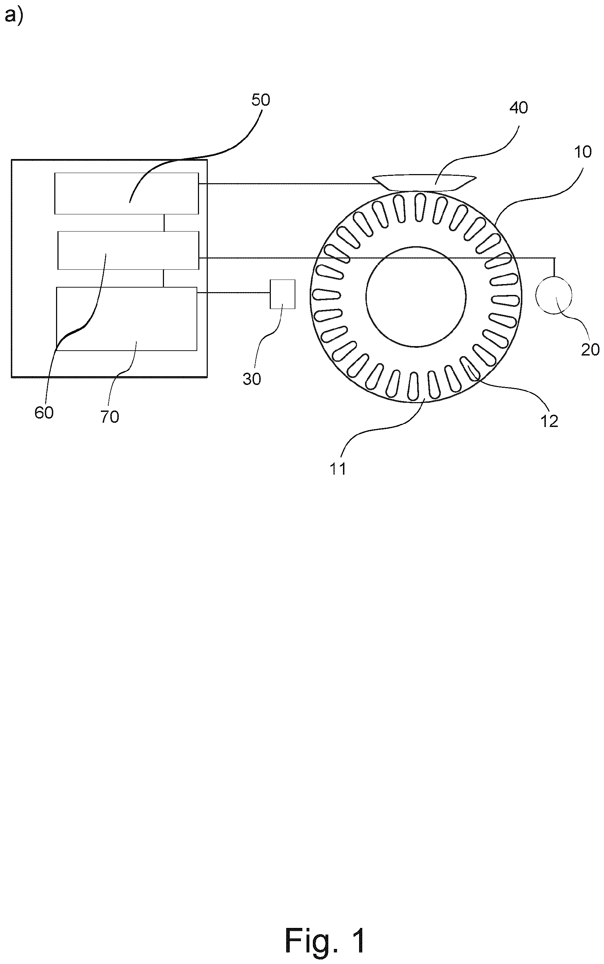

Figuren 1a - 1c zeigen drei mögliche Ausgestaltungen einer Vorrichtung zum Prüfen von elektrischen Rotoren. Die Vorrichtungen sind dafür eingerichtet, spezielle beispielhafte anmeldungsgemäße Verfahren zum Prüfen von elektrischen Rotoren auszuführen, die unten näher erläutert werden.

Das vorgestellte Verfahren und die Vorrichtung zur Prüfung von elektrischen Rotoren umfasst in möglichen Ausführungen eine Berechnung von elektrischer Leistung und von thermischen Verlusten gegossener Rotoren basierend auf durch Computertomographie erzeugten Porositätsinformationen.

Die Vorrichtungen umfassen jeweils eine Hochenergie-Röntgenquelle 20 und einen Detektor 30. Der Detektor 30 ist jeweils als Zeilendetektor ausgebildet.

In den Fällen sämtlicher Aufbauten der FIGN. 1a - c werden Drehvorrichtungen 40 bereitgestellt, die den Rotor 10 während des Durchleuchtens drehen. Dabei können alternativ oder zusätzlich jeweils der Detektor 30 und ggf. auch die Hochenergie-Röntgenquelle 20 relativ zu dem Rotor 10 gedreht werden, während der Rotor durchleuchtet wird.

Eine Steuer- und Verarbeitungsvorrichtung, die mit den genannten Komponenten der Vorrichtung verbunden ist, enthält dabei ein Steuergerät 50 für die Röntgenquelle 20, ein Steuergerät 60 für die Drehvorrichtung 40 und ein Verarbeitungs- und Simulationsgerät 70, das mit dem Detektor 30 verbunden ist. Das Steuergerät 50 für die Röntgenquelle, das Steuergerät 60 für die Drehvorrichtung und das Verarbeitungs- und Simulationsgerät 70 sind dafür eingerichtet, aufeinander abgestimmt zu arbeiten.

Im Fall der FIG. 1a wird der gesamte Rotor 10 zwischen dem Detektor 30 und der Hochenergie-Röntgenquelle 20 angeordnet, um durchleuchtet zu werden.

Die in FIG. 1a gezeigte Vorrichtung hat dabei eine Drehvorrichtung 40, die den Rotor während des Durchleuchtens derart rotiert, dass ein vollständiges CT-Bild des Rotors 10 aufgenommen werden kann. Die Drehvorrichtung 40 kann mehrere Drehfreiheitsgrade aufweisen und bspw. Drehungen um mehrere Drehachsen ermöglichen.

Mit Hilfe der Anordnung aus FIG. 1a werden beide Wandstärken inkl. des darin enthaltenen Hohlraums auf einmal durchleuchtet. So werden computertomographische 3D-Informationen, die das gesamte Volumen des Rotors 10 dreidimensional ortsaufgelöst darstellen, erhalten.

Es werden mittels irgendeiner der Vorrichtungen aus den FIGN. 1a z.B. die Schritte ausgeführt:
1. Durchführen einer CT-Analyse zum Erhalten der 3D-Information für die Gussfehler im Rotor 10, wobei der Rotor 10 mittels der Drehvorrichtung 40 gezielt bewegt wird während die Hochenergie-Röntgenquelle 20 aktiv ist, und die mittels des Detektors 30 erfassten Daten einer aus dem Steuergerät 40 für die Drehvorrichtung entnommenen Positionierung des Rotors zugeordnet werden, bis für das gesamte Rotorvolumen Bildinformationen vorliegen.
2. Mittels des Verarbeitungs- und Simulationsgeräts 70, Überführung der dreidimensional ortsaufgelösten CT-Daten in ein 3D CAD-Programm des Verarbeitungs- und Simulationsgeräts 70.
3. Mittels des Verarbeitungs- und Simulationsgeräts 70, Erstellung eines CAD-Modells für den konkreten Rotor 10, unter Verwendung der dreidimensional ortsaufgelösten Bildinformationen, die insbesondere Informationen über Gussfehler beinhalten, die sich in den Bilddaten wiederfinden.
4. Durchführen einer elektromagnetischen und vorzugsweise auch mechanischen Simulation, für das erstellte CAD-Modell, unter Annahme eines idealen CAD-Modells des Rotors ohne Gussfehler (als Referenz) für einen anschließenden Vergleich basierend auf dem CAD-Modell des Rotors mit Gussfehlern.
5. Berechnung der elektrischen Auswirkung der Gussfehler hinsichtlich elektromagnetischem Zug, Entwärmung, thermischer Verluste, magnetischer Unwucht, mechanischer Auswirkungen auf z.B. Lagerbelastungen insbesondere bei hohen Drehzahlen.
6. Analyse und Identifikation der erkannten Gussfehler, insbesondere ihrer Position und ihrer elektromagnetischen und mechanischen Auswirkungen.
7. Treffen von Maßnahmen zur Überarbeitung des Gießsystems und/oder der Gießform zum Beheben von unter 5. erkannten Problemen.

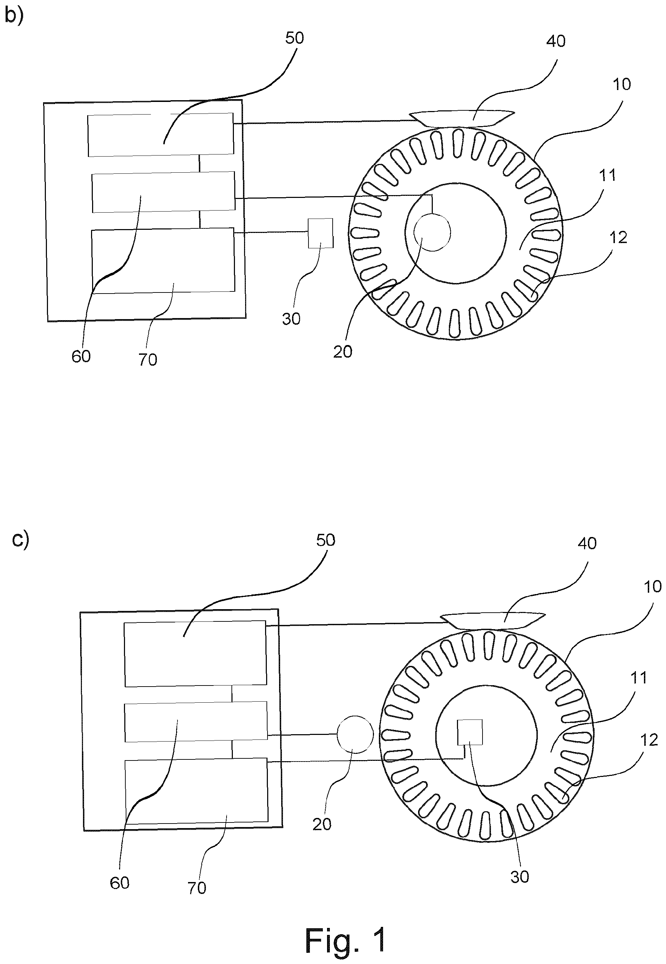

Im Fall der in FIGN. 1b und 1c gezeigten Ausführungen, wird ein zu prüfender Rotor 10 jeweils derart in der Vorrichtung angeordnet, dass eine Wand des Rotors 10 durchleuchtet wird. Dafür wird im Fall der FIG. 1b die HochenergieRöntgenquelle 20 in die Achse des Rotors 10 eingeführt und der Detektor außerhalb, auf der gegenüberliegenden Seite der Wand angeordnet, zum Durchleuchten eines Rotorquerschnitts von innen nach außen. Im Fall der FIG. 1c ist umgekehrt der als Zeilendetektor ausgebildete Detektor 30 in die Achse des Rotors 10 eingeführt und die Hochenergie-Röntgenquelle 20 außerhalb der Wand angeordnet, zum Durchleuchten des Rotorquerschnitts von außen nach innen. So wird in den beiden Fällen ein zwischen Detektor 30 und Hochenergie-Röntgenquelle 20 liegender Wandabschnitt durchleuchtet.

Die beiden Vorrichtungen der FIGN. 1b und c umfassen dabei jeweils eine Drehvorrichtung 40 zum Drehen des Rotors um seine Achse oder um eine Achse, die ungefähr der Achse des Rotors entspricht, insbesondere parallel dazu ist oder ungefähr parallel dazu ist, so dass, während der Rotor 10 gedreht wird, alle Wandabschnitte nach und nach durch die Röntgenstrahlen hindurch und am Detektor 30 vorbei rotiert werden, um schließlich ein komplettes 360°-Röntgenbild des Rotors 10 zu erhalten.

Es werden mittels der Vorrichtungen aus den FIGN. 1b oder c beispielsweise die Schritte ausgeführt:
1. Durchleuchten des Rotors 10 wobei der Rotor 10 mittels der Drehvorrichtung 40gezielt gedreht wird während die Hochenergie-Röntgenquelle 20 aktiv ist, und die mittels des Detektors 30 erfassten Daten einem aus dem Steuergerät 40 für die Drehvorrichtung entnommenen Drehwinkel zugeordnet werden, bis für den gesamten Rotor 10, insbesondere für den gesamten Umfang, d.h. für die vollen 360°, Bildinformationen für den Rotor 10 vorliegen.
2. Mittels des Verarbeitungs- und Simulationsgeräts 70, Überführung der winkelaufgelösten CT-Daten in ein 3D Programm des Verarbeitungsund Simulationsgeräts 70.
3. Mittels des Verarbeitungs- und Simulationsgeräts 70, Erstellung einer Darstellung für den konkreten Rotor 10, unter Verwendung der 360° Bildinformationen, die insbesondere Informationen über Gussfehler beinhalten, die sich in den Bilddaten wiederfinden.

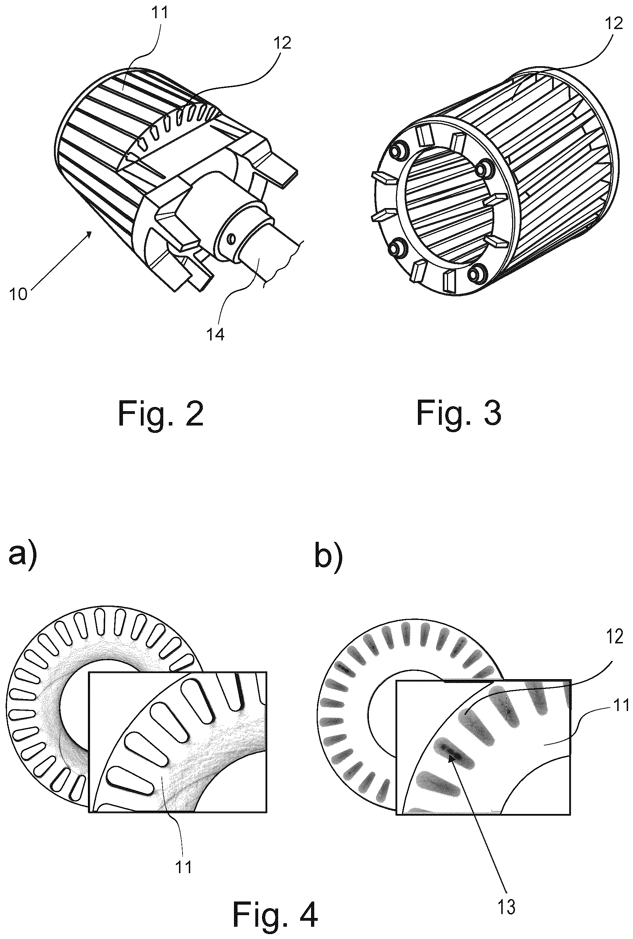

FIG. 2 zeigt einen gegossenen Rotor 10 mit einer gefügten Welle 14 im Zentrum. Er umfasst ein Blechpaket 11 und Nutstableiter 12. Ein solcher gegossener Rotor 10 für elektrische Maschinen weist i.d.R. Gussfehler 13 in den äußeren Kurzschlussringen sowie in den axial innenliegenden Nutstableitern 12 auf (s.u., FIGN. 4-8). Mit konventioneller Computertomographie (CT) konnten bisher diese Gussfehler nicht dargestellt werden. Die Kenntnis über Art, Anzahl, Volumenanteil und Verteilung der Gussfehler soll es ermöglichen, ein CAD-Modell der Gussfehler-Charakteristik zu erstellen. Auf dessen Basis ermöglicht eine elektromagnetische Simulation die Berechnung und Vorhersage der aufgrund von Gussfehlern, Porosität und Lunker reduzierten tatsächlichen elektrischen Leistung sowie der thermischen Verlustleistung.

Rotoren für elektrische Maschinen, vor allem sog. Asynchronmaschinen (ASM), werden im Metallgussverfahren (i.d.R. im Druckguss) hergestellt. Hierzu wird zunächst das Blechpaket 11 hergestellt, das aus mehreren einzelnen Elektroblechen gestapelt und paketiert wird und das axial durchgängige freie Nuten vorhält. Diese Nuten werden mit Metallschmelze ausgegossen bzw. infiltriert und bilden somit die elektrisch leitfähigen Nutstableiter 12 des Rotors 10. Ergänzend werden jeweils stirnseitig radiale Kurzschlussringe an die zwei Enden des Blechpaketes angegossen, die die Nutstableiter 12 miteinander elektrisch leitend verbinden.

Gegossene Rotoren werden etwa im Aluminium-Druckguss hergestellt. Vergossen wird dabei ein zylindrisches Stahlblechpaket mit axial durchgängigen Aussparungen (den elektrischen Nutleitern), das aus einzelnen zumeist 0,3 - 0,8 mm dicken gestanzten Elektroblechen gestapelt wird. Beim Gießen wird typischerweise zunächst ein stirnseitiger Kurzschlussring an das Blechpaket angegossen, über den anschließend nahezu zeitgleich alle Nutleiter mit Schmelze durchströmt und ausgefüllt werden, die abschließend den gegenüberliegenden zweiten Kurzschlussring füllen.

Aufgrund ihrer hohen Wandstärke neigen diese Kurzschlussringe zu erstarrungsbedingten Lunkern - insbesondere der dem Anguss gegenüberliegende Kurzschlussring, der kaum noch über den Anguss nachverdichtet werden kann.

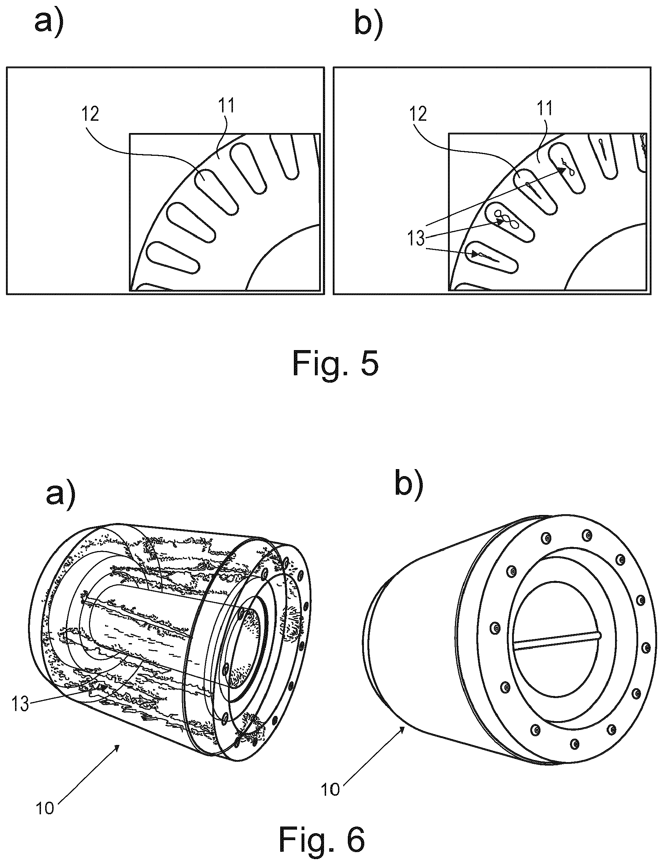

Insbesondere die dünnen, langen Nutstableiter unterliegen vielfach starken Gussfehlern. Durch die hohen thermischen Verluste beim Durchströmen der vergleichsweise dünnen Nutleiter verliert die Aluminiumschmelze schnell Temperatur und es können sich Vorerstarrungen im Nutleiterbereich innerhalb des Blechpaketes bilden. Nicht zuletzt verhindert das Gießen mit hochreinem "Rotorenaluminium" in der Qualität 99,5 - 99,7 ein großzügiges Erstarrungsintervall, das üblicherweise zur Nachverdichtung und Vermeidung von erstarrungsbedingten Lunkern genutzt werden kann. Daher entstehen vielfach erstarrungsbedingte Lunker bzw. axiale Fadenlunker im Nutstableiter (siehe unten, insbesondere FIG. 6a).

Weitere Fehler können in Form von Abrissen der Nutstableiter 12 vom Kurzschlussring oder Rissen innerhalb der Nutstableiter 12 selbst aufgrund von Schrumpfung und Schwindung in den Nutstäben entstehen. Diese Risse trennen die elektrische Leitung in einem Stab und sind verantwortlich für Inhomogenitäten im Magnetfeld und damit Leistungsverlusten sowie ungewollte Akustik ― Analog zu den beschriebenen Kaltläufen, Lunkern oder auch eingeschlossener Luft.

Eine zerstörungsfreie, bildgebende Prüfung der Rotoren hinsichtlich Erkennung dieser Gussfehler war bislang beschränkt auf eine auf Röntgenstrahlen basierte Durchleuchtung der außen freiliegenden Kurzschlussringe aus bspw. Aluminiumguss, deren Materialdichte mit 2,7 g/cm³ vergleichsweise gering ist gegenüber dem dickwandigen Blechpaket aus Stahl (Dichte ^{~} 7,6 g/cm³). Diese Kurzschlussringe sind jedoch ― elektrisch betrachtet ― von nachrangigem Interesse.

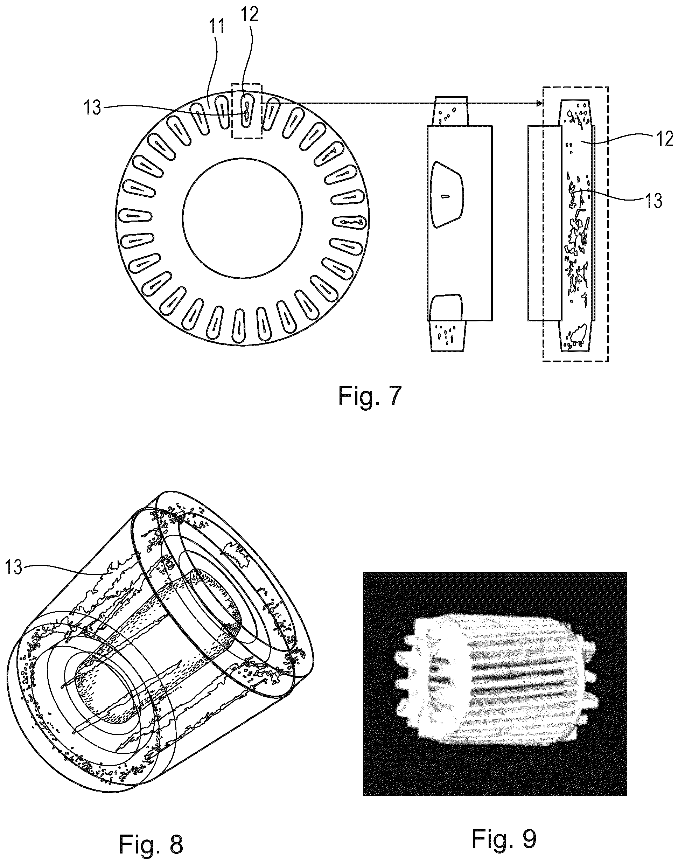

Nach dem Stand der Technik wurde zur zerstörenden Prüfung der Nutstableiter 12 das Blechpaket 11 chemisch aufgelöst, bis nur noch der Gussanteil des sog. Käfigläufers (FIG. 3) zurück bleibt (siehe hierzu auch das Foto, FIG. 9). Da dieser ausschließlich aus einem Material (meist Aluminium) einer Dichte besteht, kann er mittels Computertomographie durchleuchtet werden.

Die Erfinder haben erkannt, dass aus elektrischer Sicht die Erkennung von Gussfehlern in den Nutstableitern aus Aluminiumguss, die innerhalb des Blechpaketes verborgen liegen und die beiden äußeren Kurzschlussringe elektrisch miteinander verbinden, kritischer und wesentlich wichtiger ist. Liegen hier Gussfehler vor, die zu Verengungen des effektiven Leiterquerschnitts führen oder gar unterbrochenen Nutstäben aufgrund von Kaltläufen oder eingeschlossener Fließfront-Oxidschichten oder Rissen, dann leidet unmittelbar die elektrische Leistungsfähigkeit des gesamten Motors und es treten thermische Probleme auf. Das heißt, Gussfehler und Inhomogenitäten in diesen Bereichen führen zu Leistungsverlusten sowie einseitigem magnetischem Zug und damit zu einer ungleichen Drehung des Rotors, womit erhöhte Lagerbelastung und Schäden an der elektrischen Maschine einhergehen können, insbesondere bei hohen Drehzahlen.

Ein vollständiger CT-Scan eines Rotors ist also wünschenswert, war aber aufgrund der ungünstigen Materialpaarung aus Stahlblechpaket hoher Dichte und Aluminiumguss Nutleitern geringer Dichte bisher nicht umsetzbar.

Die vorliegende Erfindung, wie sie etwa beispielhaft oben im Zusammenhang mit FIGN. 1a-c erläutert ist, ermöglicht eine zerstörungsfreie Analyse auch heterogener Strukturen mit mehreren Materialien, wie z.B. Stahl und Aluminium.

Das hier vorgestellte Verfahren bzw. die Vorrichtung beinhaltet eine Technologiekombination aus CT-Technik, CAD-Transformation und elektromagnetischer Simulation.

Bei dem hier vorgestellten Verfahren zum Prüfen von elektrischen Rotoren werden eine Hochenergie-Röntgenquelle und ein Detektor, insbesondere ein Zeilendetektor, bereitgestellt. Ein Rotor, insbesondere ein gegossener Rotor, wird mittels der Hochenergie-Röntgenquelle und des Zeilendetektors durchleuchtet. Dabei werden dreidimensional aufgelöste Computertomographie-Informationen des Rotors erfasst.

Die Vorrichtung zum Prüfen von elektrischen Rotoren umfasst eine Hochenergie-Röntgenquelle und einen Zeilendetektor. Sie umfasst außerdem ein Verarbeitungs- und Simulationsgerät. Die Hochenergie-Röntgenquelle und der Zeilendetektor sind dazu eingerichtet, einen elektrischen Rotor dreidimensional zu erfassen. Das Verarbeitungs- und Simulationsgerät ist dazu eingerichtet, basierend auf derart erfassten dreidimensionalen Daten ein Geometriemodell des elektrischen Rotors zu erstellen und elektromagnetische Simulationen für das Geometriemodell durchzuführen.

Der Zeilendetektor ist kollimiert auf eine Linie und schließt somit die Streustrahlung aus. Dies ermöglicht ein besseres Bild und bessere Kontraste. In anderen Ausführungen kann auch ein Flächendetektor verwendet werden.

Die Kombination einer Hochenergie-Röntgenquelle mit 600 kV Leistung einer Röntgenanlage YXLON FF85 mit einem hochauflösenden Zeilendetektor YXLON CTScan 3 ermöglicht es im hier gezeigten Beispiel, gegossene Rotoren in der Größe elektrischer Pkw-Traktionsantriebe zu durchleuchten. Die Kombination aus Quelle und Detektor ermöglicht es erstmalig, trotz der Materialkombination Stahlblech-Aluminiumguss dennoch Gussfehler und Porosität geringster Dichte aufzulösen und präzise darzustellen.

In einem anderen Beispiel wird eine reduzierte Röntgenstrahlung von 450 kV verwendet.

FIGN. 4 und 5 zeigen jeweils links (a) einen konventionellen CT-Scan eines Rotors mit unzureichender Auflösung der Nutstableiter und rechts (b) "Hochenergie CT-Scans" mit 600 kV Leistung unter Verwendung des Zeilendetektors, wobei die axial durchgängigen Fadenlunker im Nutstab 12 sichtbar sind.

FIG. 4a (links) zeigt einen konventionellen CT Scan. FIG 4b (rechts) zeigt einen Hochenergie CT Scan (600kV+YXLON scan 3 detector).

FIGN. 5a und 5b zeigen die Darstellungen aus FIGN. 4a und 4b auf stark vereinfachte Weise, um den Unterschied zur besseren Erkennbarkeit schematisch zu illustrieren.

Die dreidimensionale Computertomographie-Information der Gussfehler im gesamten Rotor kann in ein dreidimensionales Geometriemodell (CAD-Modell) der Rotorporosität überführt werden.

FIG 6a (links) zeigt eine dreidimensionale Darstellung der Gussdefekte 13 und die entsprechende Fehlerverteilung aus dem high-energy-CT-Scan und FIG. 6b (rechts) zeigt eine Außenansicht des Rotors 10, in der Fehler nicht erkennbar sind.

Das dreidimensionale Porositätsmodell wird dann in eine Software zur Simulation des elektromagnetischen Verhaltens des Rotors integriert (z.B. Ansys Maxwell, Comsol, etc.)

Ziel ist es einen Vergleich der elektrischen Leistung und des thermischen Verhaltens zwischen einem idealen Rotor (ohne Gussfehler bzw. -porosität) und dem realen Rotor mit geometrisch bekannter Charakteristik an Porosität, Lunker bzw. Gussfehler zu simulieren.

Hierzu wird das zuvor gescannte Porositäts-Modell vom Rotor in eine Software eingelesen, mit der die Auswirkungen der aufgrund von Poren, Lunkern und Gießfehlern reduzierten elektrischen Leiterquerschnitte in den Nutstableitern in einem Simulationsmodell untersucht werden. Die berechneten, reduzierten Leistungswerte können mit denen eines idealen Rotors verglichen werden. Auf diese Weise soll ein "Ausschussfaktor" ermittelt werden, bis zu welchem Grad an Gussdefekten ein Rotor noch die geforderten Leistungswerte liefert.

Die Ergebnisse der CT-Analyse dienen dazu, den Gießprozess zu optimieren und an die Anforderungen des Rotorgießens hinsichtlich der Gießparameter, Werkzeugtemperierung der Formauslegung und insbesondere der Gestaltung von Anschnitt und Entlüftung zu optimieren.

Durch die direkte und schnelle Prüfung lassen sich auf Basis der CT-Analyse die Gießparameter so einstellen, dass Fehler wie Poren und Lunker gezielt beeinflusst werden, dass Größe, Form, Position und Anordnung so gesteuert werden, dass potentielle Qualitätseinbußen minimal gehalten werden und gleichzeitig ein robuster und wirtschaftlicher Prozess entsteht.

Für eine weitere Optimierung der CT-Prüfung kann die Strahlungsquelle so gestaltet werden, dass sie in die Achse des Rotors eingeführt wird und nach außen den verbleibenden halben Querschnitt des Rotors durchleuchtet. Außen am Rotor kann dann mit verschiedenen Detektoren, wie Zeilen oder Flächendetektor gearbeitet werden, je nach Kombination aus notwendiger Auflösung, Strahlungsleistung und Durchleuchtungsdauer. Dieser Aufbau kann ebenfalls in umgekehrter Weise erfolgen, indem die Strahlungsquelle außen und der Detektor in der Rotorachse positioniert wird. Vorteil dieses Vorgehens liegt darin, dass es nicht mehr zur Überlagerung von zwei zu durchleuchtenden Bereichen kommt und damit nicht mehr zur Überlagerung von Fehlern, Kanten und anderen Geometrien. Die Durchleuchtungszeit, benötigte Durchstrahlungsleistung sinkt damit und die Genauigkeit wird weiter angehoben.

Die hier vorgestellte Kombination aus Hochenergie-Röntgenquelle (600 kV bzw. 450 kV) und hochauflösendem Zeilendetektor ermöglicht erstmalig das vollständige Durchleuchten von gegossenen Rotoren, insbesondere hergestellt im Aluminium-Druckguss, in der Größe elektrischer Antriebe, insbesondere Pkw-Antriebe, vorzugsweise im Funktionsprinzip einer Asynchronmaschine.

Elektrische Pkw-Antriebe haben typischerweise Rotoren mit einem Außendurchmesser zwischen 80 mm und 300 mm, insbesondere zwischen 110 mm und 180 mm oder zwischen 130 und 150 mm. Die Vorrichtung ist dazu ausgebildet, solche Bauteile aufzunehmen.

Elektrische Pkw-Antriebe haben typischerweise Rotoren mit einem Innendurchmesser zur Aufnahme der Welle zwischen 30 mm und 80 mm, vorzugsweise zwischen 40 mm und 60 mm. Die Vorrichtung ist dazu ausgebildet, solche Bauteile aufzunehmen.

Entsprechend sind Detektor 30 oder Hochenergie-Röntgenquelle 20 ausgebildet, um in die entsprechenden Achsen solcher Rotoren 10 eingeführt zu werden.

Die axiale Länge der Rotoren ist in diesem Kontext nicht relevant, die Qualität der Durchleuchtung ist abhängig vom Durchmesser bzw. der Materialstärkenverhältnisse von Blechpaket, Nutstableiter und Luft in radialer Ausrichtung.

Das Ergebnis der elektromagnetischen Simulation liefert Auskunft, mit welcher Ausprägung die Gussfehler im Rotor die elektrische Leistung des Rotors in der elektrischen Maschine beeinflussen, insbesondere reduzieren.

Unterschiede in der Fehlerverteilung ("homogene Feinverteilung" vs. "lokal inhomogene Anhäufung") wirken sich dabei nicht nur auf die elektrische Performance, das Drehmoment sowie die Entwärmung aus. Auch die sog. "Magnetische Exzentrizität" ist ein Resultat ungleich verteilter Porosität im Rotor. Aus mechanischer Sicht werden diese resultierenden Unwuchten derzeit auf einfache Weise aufgehoben, indem die Rotoren analog zum "Räderwuchten" individuell vermessen und gewuchtet werden. Aus elektrischer Sicht ist das Problem jedoch damit nicht gelöst, weil inhomogene Nutstableiter zu einem einseitigen "magnetischen Zug" führen und der Rotor im Betrieb ungleich dreht. Welligkeiten im Drehmoment, unruhiger und akustisch auffälliger Lauf v.a. bei hohen Drehzahlen und erhöhte Lagerbelastung der Rotorwelle sind die Folge. Die Erfindung schafft hier Abhilfe.

Bisher war die Auslegung von Gießwerkzeugen auf klassische Simulationen zur Formfüllung und Erstarrung beschränkt. Zukünftig können bereits in der frühen Prototypenphase abgegossene Rotoren als Musterteile Aufschluss geben, ob Angusskonzepte zum gewünschten Ziel führen und ob sich veränderte Prozessparameter zur Reduzierung der Gussfehler auswirken.

Ebenso kann eingeschlossene Gasporosität erkannt werden, die aufgrund Abbrand bzw. thermischer Ausgasung der Elektroblech-Isolationsbeschichtung beim Gießen entstanden ist.

Begleitend zur Serienfertigung ist es möglich, anhand von Stichproben die Einhaltung der Fertigungs- bzw. Gussqualität der Rotoren zu kontrollieren sowie Veränderungen durch Werkzeugverschleiß oder aufgrund Änderungen in der Lieferqualität der Elektrobleche frühzeitig zu erkennen.

Es kann eine schnelle Optimierung des Gießprozesses und Anpassung der Parameter ermöglicht werden, die als Teil des Verfahrens durchgeführt werden kann.

Es wird eine zerstörungsfreie Prüfung und damit eine genaue Beurteilung und Aussage zu Qualität, Ausfallwahrscheinlichkeit, Akustik und Leistung eines Rotors ermöglicht.

Es wird eine zerstörungsfreie In-Line Prüfung ermöglicht, die als Teil des Verfahrens durchgeführt werden kann.

Die Qualität der Bauteile, die Wirtschaftlichkeit und Robustheit der Fertigungsprozesse kann verbessert werden.

FIG. 7 zeigt links eine radiale Darstellung eines CT-Schnittbildes vom Rotor, und zeigt rechts einen ausgewählten porösen Nutstab-Leiter 12 mit Gussfehlern 13. Der poröse Nutstableiter 12 ist rechts in einer axialen Darstellung gezeigt, mit deutlich sichtbarer, durchgängiger Porosität (Lunkerung).

FIG. 8 zeigt eine dreidimensionale Darstellung aller Gussfehler 13 (Porosität, Lunker, axiale Fadenlunker) in den endseitigen Kurzschlussringen sowie in den axialen Nutstableitern.

FIG. 9 zeigt ein Foto eines sog. "Käfigläufer" eines Rotors. Es handelt sich um den Gussanteil im Rotor, der aus Aluminium gegossen wurde und durch Wegätzen / Auflösen des Stahlblechpaketes zurückbleibt.

### Bezugszeichenliste

- 10: Rotor
- 11: Blechpaket aus Stahlblech
- 12: Nutstableiter aus Aluminiumguss
- 13: Erkennbare Gussfehler (Porosität / Lunker)
- 14: Welle
- 20: Hochenergie-Röntgenquelle
- 30: Detektor
- 40: Drehvorrichtung
- 50: Steuergerät für die Röntgenquelle
- 60: Steuergerät für die Drehvorrichtung
- 70: Verarbeitungs- und Simulationsgerät

## Patentansprüche

1. Verfahren zum Prüfen von elektrischen Rotoren, wobei eine Hochenergie-Röntgenquelle (20) und ein Detektor (30), insbesondere ein Zeilendetektor, bereitgestellt werden und ein Rotor (10), insbesondere ein gegossener Rotor (10), mittels der Hochenergie-Röntgenquelle (20) und des Detektors (30) durchleuchtet wird, zur Erfassung von ortsaufgelösten Informationen, insbesondere dreidimensional aufgelösten Computertomographie-Informationen des Rotors (10).

2. Verfahren nach Anspruch 1, wobei der Rotor (10) eine Materialpaarung aus Stahl und Aluminium enthält, insbesondere ein Stahlblechpaket (11) und Nutstableiter (12) aus Aluminiumguss enthält.

3. Verfahren nach einem der vorhergehenden Ansprüche, wobei die Hochenergie-Röntgenquelle (20) eine Leistung von mindestens 400 kV, bevorzugt mindestens 450 kV und/oder höchstens 700 kV oder höchstens 600 kV hat.

4. Verfahren nach einem der vorhergehenden Ansprüche, wobei basierend auf den ortsaufgelösten Informationen, insbesondere dreidimensional aufgelösten Computertomographie-Informationen ein Geometriemodell, insbesondere dreidimensionales Geometriemodell, insbesondere ein CAD-Modell, für den Rotor (10) erstellt wird, und wobei vorzugsweise mit Hilfe der Hochenergie-Röntgenquelle (20) und des Detektors (30), insbesondere Zeilendetektors, detektiere Gussfehler (14), insbesondere Porositäten und/oder Lunker in den Nutstableitern (12) des Rotors (10), aufgelöst werden.

5. Verfahren nach Anspruch 4, wobei mit Hilfe einer Simulationssoftware zur Simulation von elektromagnetischen Systemen auf Basis des Geometriemodells, insbesondere dreidimensionalen Geometriemodells, ein elektromagnetisches Verhalten des Rotors (10) simuliert wird und insbesondere eine elektrische Leistungsfähigkeit und/oder thermische Eigenschaften, insbesondere thermische Verluste, und/oder ein elektromagnetischer Zug bestimmt werden.

6. Verfahren nach einem der vorhergehenden Ansprüche, wobei eine Wand des Rotors (10) durchleuchtet wird, während zwischen Rotor (10) und dem Detektor (30) und/oder der Hochenergie-Röntgenquelle (20) eine Relativdrehung ausgeführt wird, insbesondere der Rotor (10) gedreht wird.

7. Verfahren nach Anspruch 6, wobei Röntgenbildinformationen des Rotors (10) über den Azimut, der mit dem Drehwinkel der Drehung des Rotors (10) korreliert, aufgetragen werden, insbesondere in einer ausgerollten Darstellung.

8. Verfahren gemäß einem der vorhergehenden Ansprüche, wobei Daten mehrerer Rotoren (10), die unter Verwendung desselben Gießwerkzeugs hergestellt wurden, gespeichert und miteinander verglichen werden, um Rückschlüsse auf das Gießwerkzeug zu ziehen.

9. Vorrichtung zum Prüfen von elektrischen Rotoren, umfassend eine Hochenergie-Röntgenquelle (20) und einen Detektor (30) sowie ein Verarbeitungs- und Simulationsgerät (70), wobei die Hochenergie-Röntgenquelle (20) und der Detektor (30) eingerichtet sind, einen elektrischen Rotor (10) ortsaufgelöst, insbesondere dreidimensional, zu erfassen und wobei das Verarbeitungs- und Simulationsgerät (70) eingerichtet ist, basierend auf derart erfassten ortsaufgelösten Daten ein Geometriemodell des elektrischen Rotors (10) zu erstellen und elektromagnetische Simulationen für das Geometriemodell durchzuführen.

10. Vorrichtung nach Anspruch 9 wobei der Detektor (30) ein Zeilendetektor oder ein Flächendetektor ist.

11. Vorrichtung nach Anspruch 9 oder 10, weiterhin eine Drehvorrichtung zum Drehen des Rotors (10) umfassend.

12. Vorrichtung nach einem der Ansprüche 9 bis 11, wobei die Hochenergie-Röntgenquelle (20) derart ausgebildet ist, dass sie in die Achse des Rotors (10) einführbar ist, zum Durchleuchten eines Rotorquerschnitts von innen nach außen.

13. Vorrichtung nach einem der Ansprüche 9 bis 11, wobei der Detektor (30) derart ausgebildet ist, dass er in die Achse des Rotors (10) einführbar ist.

14. Verwendung der Vorrichtung nach einem der Ansprüche 9 bis 13 zur Durchführung eines Verfahrens nach einem der Ansprüche 1 bis 8.
